Europäisches Patentamt

(19) European Patent Office

Office européen des brevets

(11) Publication number: **0 014 373**
A1

## (12) EUROPEAN PATENT APPLICATION

(21) Application number: 80100311.2

(22) Date of filing: 22.01.80

(51) Int. Cl.³: **G 01 D 5/26**
G 01 K 11/12, G 01 L 1/24

(30) Priority: 22.01.79 US 5262

(43) Date of publication of application:
20.08.80 Bulletin 80/17

(84) Designated Contracting States:
DE FR

(71) Applicant: Rockwell International Corporation
2230 East Imperial Highway
El Segundo, California 90245(US)

(72) Inventor: James, Kenneth Allan
320 Iris Avenue
Corona Del Mar, CA 92625(US)

(72) Inventor: Quick, William Henry
1818 Kanola Road
LaHabra Heights, CA 90631(US)

(72) Inventor: Strahan, Virgil Haskell
2519 Dorothy Drive
Orange, CA 92619(US)

(74) Representative: Wagner, Karl H.
P.O. Box 246 Gewuerzmuehlstrasse 5
D-8000 München 22(DE)

(54) Optical sensor including a narrow band filter.

(57) A low cost, easily fabricated optical sensor comprising a narrow band filter (1) that is responsive to changes in a physical parameter, such as temperature or pressure. The narrow band filter is fabricated by means of a crystalline structure, such as an anisotropic crystal (2), that is common to many hexagonal materials. Polarized incident light waves can be electromagnetically coupled in the crystal from one perpendicular optical axis to another at a particular wavelength, which wavelength is representative of the physical parameter to be sensed. The crystal selectively transmits an output light signal that has the wavelength or color at which the electromagnetic coupling occurs. By detecting and analyzing the wavelength or color of the output light signal, an accurate indication of the parameter can be obtained.

FIG 1

1. Field of the Invention.

This invention relates to an optical sensor comprising a narrow band crystalline filter, the band-pass of which is a function of a physical parameter to be sensed.

2. Prior Art.

Presently, no non-mechanical means is known for varying the band-pass of an optical filter as a function of a physical parameter. Optical band-pass filters are known to those skilled in the art. However, most contemporary optical band-filters (e.g., multi-layer interference filters or Fabrey-Perot cavities) are high cost, relatively complex microfabricated elements of very precise dimension. Moreover, the available types of band-pass filters are relatively insensitive to most environmental parameters. So far as is known, no optical filter has heretofore been implemented for utilization in a sensor application, wherein the band-pass of the filter is a function of the physical parameter to be sensed. What is more, nothing is known which shows or suggests a narrow band filter consisting of a single anisotropic crystal and having application as an optical sensor.

As will be understood by those skilled in the art, materials existing in a crystalline state are optically distinguishable from materials existing in other physical states, inasmuch as crystals are generally electrically anisotropic. That is, the polarization produced in a crystalline structure by a particular electric field is not simply the product of a scaler constant multiplied by the magnitude of the electric field. However, crystal polarization varies according to a relationship that is dependent upon the direction of the applied electric field relative to the optical axis of the crystal lattice structure.

One example of an optical sensor that utilizes an anisotropic crystalline structure for sensing a physical parameter can be found in the U.S. Patent Application entitled OPTICAL TEMPERATURE SENSOR UTILIZING BIREFRINGENT CRYSTALS and assigned docket No. 78E132 by the common assignee thereof. However, the luminous intensity (rather than wavelength or color) of the output signals generated by the aforementioned sensor is processed in order to obtain an indication of the parameter to be sensed.

## SUMMARY OF THE INVENTION

Briefly, and in general terms, a low cost, easily fabricated optical sensor is disclosed that is sensitive to a physical parameter, such as temperature, pressure, or the like. The optical sensor includes a narrow band filter comprising an anisotropic crystalline structure. In a preferred embodiment of the invention, the band-pass of the filter varies as a function of the physical parameter to be sensed. The filter is fabricated so that the anisotropic crystal is sandwiched between a pair of polarizer elements.

In operation, incident white light is supplied to a first of the pair of polarizer elements. The polarized light from the first polarizer element is supplied to the anisotropic crystal, whereby light waves having a light transmitted polarized mode and being propagated in a first direction can be electromagnetically coupled to light waves having a light absorbing polarized mode and being propagated in a second, relatively perpendicular direction. It has been found that the complete electromagnetic coupling of energy between the two polarized modes occurs only at a temperature or pressure which corresponds to that wavelength where the indices of refraction of the perpendicularly propagated light waves are identical to one another. The second polarizer element selectively transmits a polarized output signal, which output signal has the particular wavelength (or color) at which complete electromagnetic coupling occurs. By detecting the output wavelength (or color) of the optical sensor, an accurate indication of the physical parameter may be obtained.

## BRIEF DESCRIPTION OF THE DRAWINGS

Fig. 1 shows the narrow band crystalline filter of the present invention and the propagation of polarized incident light signals that are selectively transmitted therethrough.

Fig. 2 is a graphic illustration of the relationship between wavelength (or color) and the index of refraction of the polarized incident light signals that are selectively transmitted through the crystalline filter of Fig. 1.

Fig. 3 is a mechanical model that describes the coupling of energy between two pendula, which model is analogous to the electromagnetic coupling between the polarized modes of two light signals that are selectively transmitted through the crystalline filter of Fig. 1.

## DESCRIPTION OF THE PREFERRED EMBODIMENT

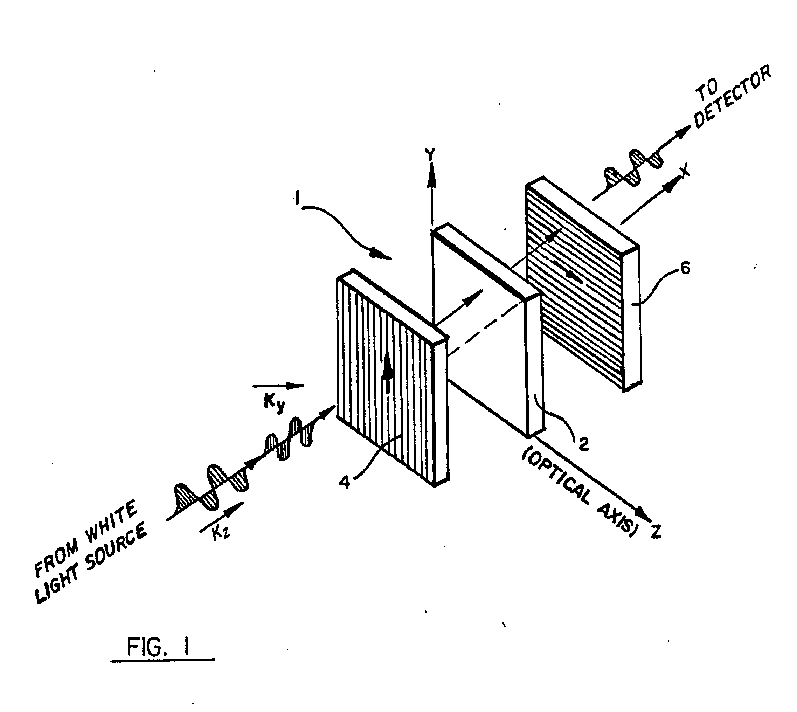

In accordance with the present invention, a low cost, easily fabricated, narrow band, optical filter, consisting of a crystalline material, is disclosed below, which filter is sensitive to change in a physical parameter (e.g. such as temperature, pressure, and the like). The instant narrow band filter has particular application as an optical sensor for providing accurate measurements regarding the physical parameter. More particularly, a unique concept for implementing an optical filter sensor element 1 involves the electromagnetic coupling of polarized incident light waves in a mixed crystal structure. As shown in Fig. 1 of the drawings, an anisotropic crystal 2 is sandwiched between a pair of polarizer elements 4 and 6. In one preferred embodiment of the invention, first polarizer element 4 is a vertical wave polarizer, and second polarizer element 6 is a horizontal wave polarizer. By way of example, the anisotropic crystal of Fig. 1 may be that found in certain hexagonal semiconductur materials, such as zinc oxide and cadmium sulfide.

In operation, incident white light is supplied, along the input or X-axis, to the anisotropic crystalline structure 2 of a hexagonal semiconductor via the first vertical wave polarizer element 4. The incident white light that is polarized vertically, along the Y-axis, transfers its energy to the Z-axis (i.e. the optical axis of crystal 2), so that, from the Y-axis, it appears as if the energy is being absorbed. It has been found that this apparent absorption of the energy of the incident light does not occur as a result of transitions between two discreet electronic energy levels. Such incident light absorption is, otherwise, caused by a coupling of energy from the transmitted polarization mode (i.e. that incident light which is perpendicular to the optical axis of the crystal) to the light absorbing polarization mode (i.e. that incident light which is parallel to the optical axis of the crystal), and vice versa. That is, as the polarized incident light is transmitted through anisotropic crystal 2, electromagnetic energy is coupled from one axis, or that corresponding to the vertical Y-axis of crystal 2, to another, perpendicular axis, or that corresponding to the horizontal Z-axis. As a result of this energy coupling, a horizontally polarized wave eventually builds up in crystal 2.

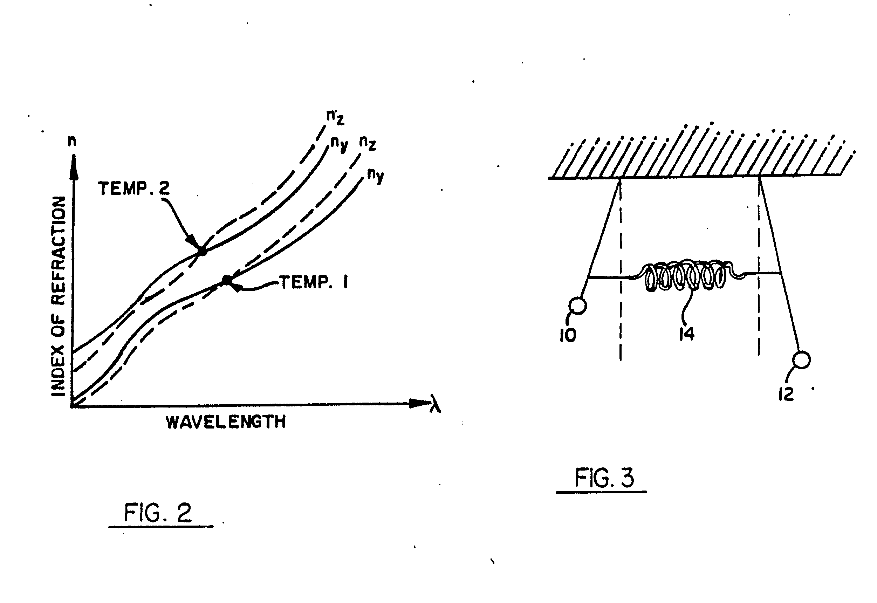

Ordinarily, the aforementioned energy coupling between the perpendicular Y and Z-axes of crystal 2 would not take place. However, as is best represented in Fig. 2 of the drawings, the index of refraction curve (designated $n_y$) of that light wave which is transmitted through the anisotropic crystal 2 in the X-direction and is polarized in the Y-direction intersects the index of refraction curve (designated $n_z$) of that light wave which is transmitted through crystal 2 in the X-direction and is polarized in the Z-direction. Because of the material characteristics of an anisotropic crystal, as the temperature (or pressure) to which crystal 2 is exposed changes, the index of refraction curves, $n_y$ and $n_z$, accordingly shift, so that a plurality of respective index intersections may be obtained. At each of the intersections of a related pair of indices of refraction (i.e. where $n_y = n_z$), the anisotropic

crystal becomes optically isotropic, whereby the horizontally and vertically polarized light waves have the same phase velocities (i.e. $\bar{k}_y = \bar{k}_z$). As a result, the energy from the Y-axis is easily coupled to the energy from the perpendicular Z-axis, and vice versa. It is to be recognized that this energy coupling only takes place at those particular energy levels (i.e. optical wavelengths) where the refractive index curves of the anisotropic crystal intersect one another, so as to give rise to discrete spectral lines, which spectral lines may be detected by conventional means.

The difficulty of coupling two electromagnetic waves between two perpendicular axes, as discussed above, is similar to the problem in mechanics of coupling two identical pendula through a weak spring. For purposes of convenience and illustration, a mechanical model that is also representative of electromagnetic energy coupling is shown in Fig. 3 of the drawings. It is assumed that one pendulum 10 of the model is initially at rest while the second pendulum 12 initially possesses some energy. It is also assumed that negligible energy is stored in spring 14 and that damping is relatively small. As will be known to those skilled in the art, if the resonant frequencies of pendula 10 and 12 are identical (i.e. $\omega_{10} = \omega_{12}$), then energy is transmitted from pendulum 12 through spring 14 to pendulum 10, so that pendulum 12 is ultimately at rest, and all of the energy that has not been otherwise dissipated is transferred to pendulum 10. Through additional oscillations, pendulum 10 will subsequently transfer energy back to pendulum 12 through spring 14, and so on. This illustration is analogous to the coupling of electromagnetic energy between the light transmitted and the light absorbing polarized modes when the corresponding indices of refraction, $n_z$ and $n_y$, are identical to one another. If, however, the resonant frequencies of pendula 10 and 12 are not equal (i.e. $\omega_{10} \neq \omega_{12}$) and if the difference therebetween is relatively large compared to the frequency at which energy is transferred between pendula 10 and 12, then long before pendulum 12 has transferred all of its energy to pendulum 10, the relative phase of the two pendula 10 and 12 changes, so that energy begins to flow back to pendulum 12 through spring 14. Thus, while the frequency of energy transfer between pendula 10 and 12 increases, the energy transfer from pendulum 10 back to pendulum 12 will be far from complete. The equation $(\omega_{10} - \omega_{12})t$ describes the amount of energy transferred berween the two pendula 10 and 12, as a function of time (t) for the pendula having respective resonant frequencies $\omega_{10}$ and $\omega_{12}$.

The equation $(\bar{k}_y - \bar{k}_z)x$ describes the amount of coupled electromagnetic energy that is transferred through anisotropic crystal 2 of Fig. 1. This equation is similar to the equation for determining the amount of mechanical energy transferred between pendula 10 and 12. However, the amount of transferred electromagnetic energy is a function of the length, designated x, of the crystal (rather than time). In another preferred embodiment of the present invention, the length, x, of the anisotropic crystal is particularly sized, so that the complete coupling of electromagnetic wave energy between the light transmitting mode and the light absorbing mode occurs precisely an odd number of times. Therefore, the net effect of particularly sizing crystal 2, as disclosed above, is that energy in the vertical polarization mode is coupled to the horizontal polarization mode, so that only horizontally polarized light waves will be transmitted from crystal 2 to the second polarizer element 6. The amount of coupled energy is also a function of the respective phase velocity vectors, $\bar{k}_y$ and $\bar{k}_z$, of the incident light waves, as well as the temperature to which the crystal 2 is exposed and the wavelength of the light waves that are transmitted therethrough.

The second, horizontal wave polarizer element 6 selectively transmits a maximized horizontally polarized output light signal when complete mode coupling occurs in crystal 2. In other words, a polarized output signal, having a particular wavelength is transmitted by polarizer element 6 only when such complete mode coupling occurs. All other (e.g. vertical) components of the polarized output light signal are not electromagnetically coupled and, hence, are filtered out by polarizer element 6. Inasmuch as the output light waves that selectively transmitted by polarizer element 6 have particular optical characteristics that are representative of a physical parameter to be sensed, the optical sensor element 1 of Fig. 1 functions as a narrow band-pass filter, the band-pass of which is responsive to changes of either temperature, pressure, or the like.

Referring concurrently to Figs. 1 and 2 of the drawings, it can be seen that for every different temperature, there is a corresponding wavelength (or color) at which complete electromagnetic energy coupling occurs between the light transmitted and light absorbing modes. Such complete coupling only occurs, as previously disclosed, at the respective wavelengths where the indices of refraction, $n_y$ and $n_z$, of the light waves polarized in the Y and Z directions are equal to one another. As was also previously disclosed, the second polarizer element 6 acts to filter the output light waves from anisotropic crystal 2, so that only horizontally polarized output light waves are transmitted therethrough, which light waves have a particular wavelength that corresponds to that temperature (or pressure) where the indices of refraction, $n_y$ and $n_z$, are identical. Therefore, the particular wavelength, or color, of the output light waves that are emitted from polarizer element 6 can be detected, so as to provide an accurate indication of the temperature (or pressure) to which the anisotropic crystal sensing element 1 is exposed. By way of example, conventional detecting means such as a spectro-photometer, may be utilized to analyze the color of the output light signals in order to provide an indication of the physical parameter to be sensed.

The optical filter sensor element of the present invention may be implemented as either a band-pass or band-reject filter. Should a band-pass filter be desirable, then polarizer elements 4 and 6 are cross polarizers. However, should a band-reject filter be desired, then the polarizer elements are parallel polarizers. However, regardless of the type of polarizer element utilized herein, the particular wavelength or color of the filter output light waves is responsive to a change in temperature or to the application of an external pressure.

It will be apparent that while a preferred embodiment of the invention has been shown and described, various modifications and changes may be made without departing from the true spirit and scope of the invention. For example, the optical filter sensing element of Fig. 1 may be interfaced with a fiber optic transmission system, so that incident white light may be supplied to polarizer element 4 and the horizontally polarized output light signals may be transmitted from polarizer element 6 to a wavelength (or color) detector by means of fiber optic techniques. Having thus set forth a preferred embodiment of the present invention, what is claimed is:

- 1 -

C L A I M S

1. An optical sensor for sensing a physical parameter, said sensor comprising a narrow band crystalline filter that is adapted to receive a supply of incident light signals, said sensor being responsive to a change in the parameter to be sensed to electromagnetically vary the optical characteristics of the light signals passing therein, whereby the particular wavelength of the output light signals that are selectively transmitted by said crystalline filter is indicative of the pyhsical parameter.

2. The optical sensor recited in Claim 1, wherein said crystalline filter includes an anisotropic crystal.

3. The optical sensor recited in Claim 1, further including detector means that is responsive to the wavelength or color of the output light signals so as to provide a corresponding indication of the physical parameter to be sensed.

4. The optical sensor recited in Claim 1, further including a pair of polarizer elements arranged so as to polarize the incident light signals supplied to said crystalline filter and the light signals supplied from said crystalline filter, whereby polarized output light signals that are indicative of the physical parameter are selectively transmitted by said optical sensor.

5. The optical sensor recited in Claim 4, wherein each of said pair of polarizers is a cross polarizer.

6. The optical sensor recited in Claim 4, wherein each of said pairs of polarizers is a parallel polarizer.

7. An optical filter to selectively transmit output light signals, the wavelength of which signals is indicative of a physical parameter, said filter comprising:

first and second polarizers, and

anisotropic crystal means positioned between said first and second polarizers,

said first polarizer adapted to provide said crystal means with a supply of polarized incident light signals,

said crystal means adapted to electromagnetically couple energy between different polarization modes of said incident light signals, said different polarization modes being coupled at identical wavelengths, which wavelength corresponds to the physical parameter,

said second polarizer adapted to selectively transmit polarized output light signals having the particular wavelength at which the electromagnetic energy coupling occurs, so as to provide an indication of said parameter.

8. The optical filter recited in Claim 7, wherein the length of said anisotropic crystal means is particularly sized, so that electromagnetic coupling from one polarization mode to another occurs an odd number of times.

9. The optical filter recited in Claim 7, wherein said filter is a band-pass filter, the band-pass of which varies as a function of the physical parameter.

10. The optical filter recited in Claim 7, wherein said filter is a band-reject filter.

FIG. 1

FIG. 2 — INDEX OF REFRACTION vs WAVELENGTH, TEMP. 2, TEMP. 1, $n_z$, $n_y$, $n_z$, $n_y$, $n$, $\lambda$

FIG. 3 — 10, 14, 12

European Patent Office

**EUROPEAN SEARCH REPORT**

**0014373**

Application number

EP 80 10 0311

## DOCUMENTS CONSIDERED TO BE RELEVANT

| Category | Citation of document with indication, where appropriate, of relevant passages | Relevant to claim |
|---|---|---|
| X | GB - A - 1 246 432 (MULLARD LTD.)<br>* The patent as a whole * | 1-7 |
| | US - A - 3 439 974 (C.H. HENRY et al.)<br>* Column 1, line 47 - column 3, line 25 * | 1,2,4-7,9-10 |
| P | CONTROL ENGINEERING, vol. 26, no. 2, February 1979, pages 30-33 New York, U.S.A.<br>K.A. JAMES et al.: "Fiber Optics: The Way to True Digital Sensors?"<br>* Page 32, paragraph: Coupling polarized light in mixed crystals" | 1-7,9-10 |

**CLASSIFICATION OF THE APPLICATION (Int. Cl. 3)**

G 01 D   5/26
G 01 K   11/12
G 01 L   1/24

**TECHNICAL FIELDS SEARCHED (Int.Cl. 3)**

G 01 D
G 01 L
G 01 K
G 01 J
G 01 N

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-03-1980 | CARETTE |

EPO Form 1503.1   06.78